# EUROPEAN PATENT APPLICATION

(11) **EP 2 323 459 A1**
(43) Date of publication of application: **18.05.2011**
(21) Application number: 09811487.9
(22) Date of filing: 01.09.2009
(51) Int. Cl.: H04W 84/02, H04W 72/04, H04W 88/06

(54) **MOBILE COMMUNICATION SYSTEM AND METHOD**

(30) Priority: 03.09.2008 JP 2008226465
(71) Applicant: NTT DOCOMO, INC., Chiyoda-ku Tokyo 100-6150 (JP)
(72) Inventor: SAWAHASHI, Mamoru, Tokyo 100-6150 (JP); TANNO, Motohiro, Tokyo 100-6150 (JP); MIKI, Nobuhiko, Tokyo 100-6150 (JP)
(74) Representative: HOFFMANN EITLE
(86) International application number: PCT/JP2009/065256
(87) International publication number: WO 2010/026961

(57) **Abstract**

A mobile communications system includes a first system which communicates with a user apparatus in a frequency division duplex (FDD) scheme and a second system which communicates with a user apparatus in a scheme which is different from the first system. The second system conducts uplink and downlink communications within a frequency bandwidth between uplink and downlink of the first system. A geographical range of the second system is narrower than a geographical range of the first system. A downlink transmission power of a base station of the second system is weaker than a downlink transmission power of a base station of the first system.

## Description

### BACKGROUND OF THE INTENTION

### 1. Field of the Invention

The present invention relates generally to the technical field of mobile communications, and specifically to mobile communications systems including multiple systems and to methods.

### 2. Description of the Related Art

A technique which realizes two-way communications includes a frequency division duplex (FDD) scheme. The FDD scheme provides for separate frequencies for uplink and downlink. A dedicated bandwidth is provided for both uplink and downlink, making it possible to conduct communications simultaneously in uplink and downlink directions. Therefore, a signal may be transmitted any time as needed, making it possible to speedily return a feedback signal, for example. The feedback signal may include acknowledgement information (ACK/NACK) in a hybrid automatic repeat request (HARQ) scheme, channel state information (CQI: channel quality information), etc.

A different technique for realizing two-way communications includes a time-division duplex (TDD) scheme. The TDD scheme, which may use the same frequency for uplink and downlink, makes it possible to achieve effective frequency utilization. The TDD scheme achieves two-way communications by temporally alternating uplink and downlink. Thus, even when a signal to be transmitted is produced, it needs to wait until the time at which it may be transmitted, so that a temporally discontinuous burst-shaped signal is transmitted. Thus, an instantaneously large transmission power is needed relative to an FDD scheme, so that (especially for uplink) the FDD scheme is preferable from a viewpoint of coverage of a cell.

On the other hand, different frequencies are used for uplink and downlink in the FDD scheme, so that a duplexer which properly separates them is needed within a radio apparatus. In the FDD scheme, an uplink band and a downlink band need to be separated to some extent, taking into account the frequency-separating characteristics of the duplexer. A bandwidth between uplink and downlink is called a center gap. A bandwidth needed for the center gap depends on a center frequency of the center gap, so that higher the center frequency the wider the center gap needed. The center gap cannot be used actively in an FDD communications system, so that the center gap is preferably as narrow as possible from a point of view of achieving frequency utilization efficiency.

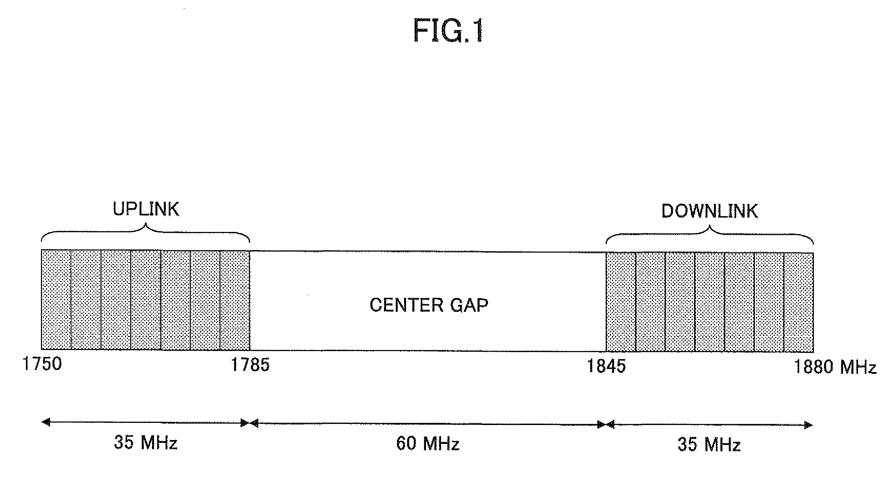

FIG. 1 schematically shows a frequency utilization status of a 2 GHz band in an IMT-2000 scheme (3G system). In an example shown, there exist seven operators which provide an FDD communications service, each operator using 5 MHz each for uplink and downlink. The center gap is set to 60MHz. With an expected increase in bandwidth in future communications systems, there is a concern for an increase also in the center gap.

From such a viewpoint, it is possible to provide a frequency of a different system within the center gap. For example, for the 2 GHz band for the above-described 3G system, a use of the frequency in the center gap for space communications, etc., is being considered. This type of exemplary frequency use is disclosed in Non-patent document 1, which was available at the time of filing of the subject application.

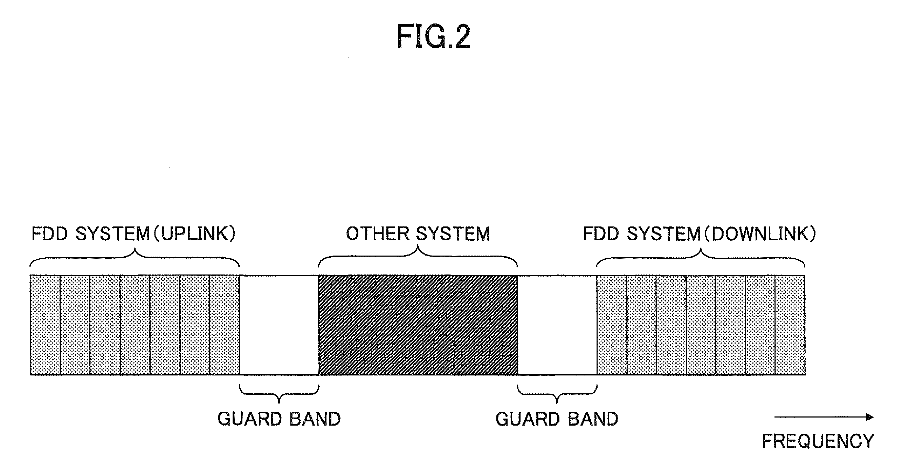

FIG. 2 shows how a frequency of a different system is provided within the center gap of the FDD system. When using the center gap for any system, it is required that a guard band is secured as sufficiently wide as possible such that no interference occurs with the FDD system. As a result of securing the guard band as sufficiently wide as possible, it may possibly be necessary to expand the center gap itself. Thus, a still-unused frequency bandwidth (the center gap or the guard band) remains as being wide, which is not desirable from a point of view of frequency utilization efficiency.

Non-patent document 1: Portal site on information and communication policies of Ministry of Public Management, Home Affairs, Posts and Telecommunications, Study meeting on increased utilization of frequencies for mobile telephones, First meeting (Thursday, October 21, 2004), Documents for distribution, Document 1-5-Internet, http://www.soumu.go.jp/joho_tsusin/policyreports/chous a/keitai-syuha/pdf/041021_3_s5.pdf

### SUMMARY OF THE INVENTION

### [Problems to be solved by the Invention]

An object of the present invention is to achieve an effective utilization of a frequency bandwidth between uplink and downlink in an FDD system.

A mobile communications system used in the present invention includes a first system which communicates with a user apparatus in a frequency division duplex (FDD) scheme and a second system which communicates with a user apparatus in a scheme which is different from the first system. The second system conducts uplink and downlink communications within a frequency bandwidth between uplink and downlink of the first system. A geographical range of the second system is narrower than a geographical range of the first system. A downlink transmission power of a base station of the second system is weaker than a downlink transmission power of a base station of the first system.

### [Advantage of the Invention]

The present invention makes it possible to achieve an effective utilization of a frequency bandwidth between uplink and downlink in an FDD system.

### BRIEF DESCRIPTION OF THE DRAWINGS

FIG. 1 is a diagram illustrating an example of frequency utilization in an FDD scheme;
FIG. 2 is a diagram illustrating another example of frequency utilization in the FDD scheme;
FIG. 3 is a diagram illustrating a mobile communications system;
FIG. 4 illustrates a frequency utilization status in the mobile communications system in FIG. 3;
FIG. 5 is a diagram illustrating another mobile communications system;
FIG. 6 is a diagram showing how base stations with different transmission powers neighbor;
FIG. 7 is a diagram illustrating how a user apparatus is connected to a macro cell; and
FIG. 8 is a diagram illustrating how a user apparatus is connected to a pico cell.

### DESCRIPTION OF THE PREFERRED EMBODIMENTS

### [Description of Notations]

FDD Frequency division duplex; TDD Time division duplex; BS base station; UE user apparatus

### [Best Mode of Carrying Out the Invention]

In one embodiment of the present invention, a center gap of a first system of an FDD scheme is used for a second system with a small transmission power, which second system is restricted with respect to a location of use. This makes it possible to achieve an effective utilization of the center gap. The transmission power of the second system (primarily the transmission power for downlink) may be restricted to a small level to suppress interference provided to the first system. This contributes to narrowing a guard band which must be provided within the center gap. Moreover, a proper use may be made of the first and second systems depending on the location, and intersystem interference may be decreased to decrease the guard band. For example, it is possible to make the first system an outdoor system and the second system an indoor system. Making proper use of the first and second systems depending on the location is not limited to indoor/outdoor, so that any scheme may be used for making the proper use.

The second system may be a system of a TDD scheme. The TDD scheme has good frequency utilization efficiency in that the center gap is not necessary. However, as described above, for the TDD scheme, a signal becomes a burst signal, so that there is a concern with restriction of coverage in uplink. Moreover, when multiple operators exist, it is necessary to synchronize between operators and to align slot allocation timings for uplink and downlink. Otherwise, a wide guard band needs to be provided between the operators. On this point, embodiments of the present invention restrict the second system of the TDD scheme to small-power use for indoors, etc., making it possible to avoid problems of coverage and of synchronization between the operators. For the problem of synchronization, it suffices to make sure that multiple operators do not co-exist in a location at which the second system is used. From such a viewpoint, systems which supplement each other are also possible such that a sufficient coverage is realized outdoors with the FDD scheme and communications is conducted indoors with the TDD scheme. While different communications schemes lead to different terminal device configurations, for the FDD and TDD schemes, there is an advantage that there are a large number of common portions in the terminal device configurations, making it possible to realize a shared-use terminal at low cost.

Conducting communications of the second system of the TDD scheme with the center gap of the first system of the FDD scheme yields another advantage. If base stations of different transmission powers neighbor, an optimal location for conducting handover differs between uplink and downlink. There is a concern with a problem that an optimal handover cannot be conducted easily if both base stations use the same frequency. In the embodiments of the present invention, the first and second systems operate at different frequencies. The base stations of the first system all transmit at the same transmission power. A transmission power of a base station of the first system and a transmission power of abase station of the second system may differ (typically, the transmission power of the base station of the second system is weaker). Thus, a situation occurs such that base stations with different transmission powers neighbor; however, they belong to systems with different frequencies. A problem with interference that is of a concern when neighboring base stations use the same frequency and have different transmission powers may be avoided effectively.

According to the embodiments of the present invention, a center gap which is not actively used for overhead conventionally may be utilized to achieve improved frequency utilization efficiency.

### Embodiment 1

### System

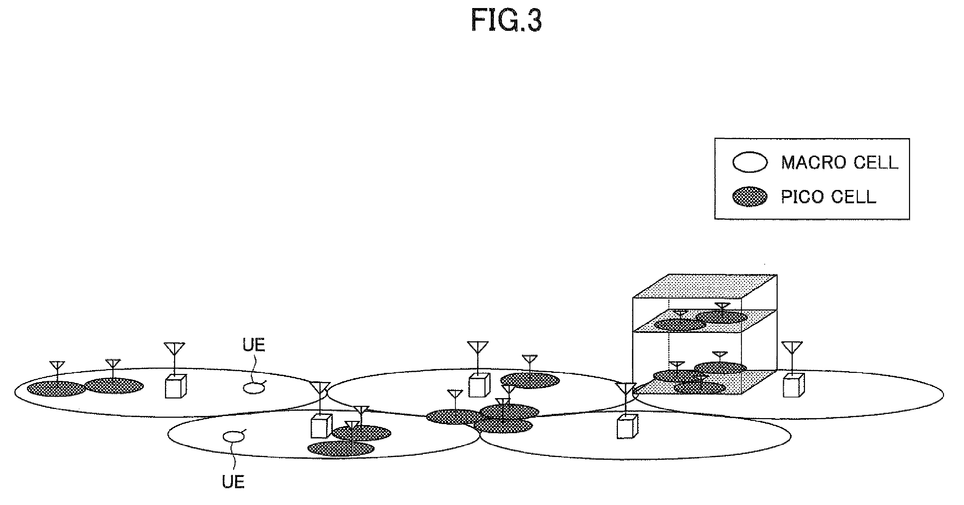

FIG. 3 shows a mobile communications system according to one embodiment of the present invention. The mobile communications system includes a first system which communicates with a user apparatus in a frequency division duplex (FDD) scheme and a second system which communicates with a user apparatus in a scheme which is different from the first system. As shown, cells of the first system make up a macro cell, while cells of the second system make up a pico cell. The pico cell is provided at locations such as a specific region in which traffic tends to concentrate, a specific indoor location, etc. Thus, in general, a downlink transmission power of a base station of the second system is weaker than a downlink transmission power of a base station of the first system. The second system is any mobile communications system of a small power that operates at a frequency which is different from the first system and is, preferably, a system of a time division duplex (TDD) scheme. Moreover, the second system preferably operates such that it supplements the first system. For example, it is possible that, when the number of users becomes large in the first system, some of the users are carried in a neighboring second system to achieve traffic load distribution. The first and second systems may be outdoor systems or indoor systems, but for convenience of explanations, an outdoor first system, an indoor second system, and an outdoor second system are shown.

It is desirable that the user apparatus may communicate in both the first and second systems. When the communications scheme differs between the first and the second systems, device configurations need to be provided separately for each system, so that the user apparatus becomes expensive. However, when the first system is of the FDD scheme and the second system is of the TDD scheme, there are a number of common portions in the configurations of the user apparatus, making it possible to realize a shared-use terminal at low cost.

### Frequency bandwidth

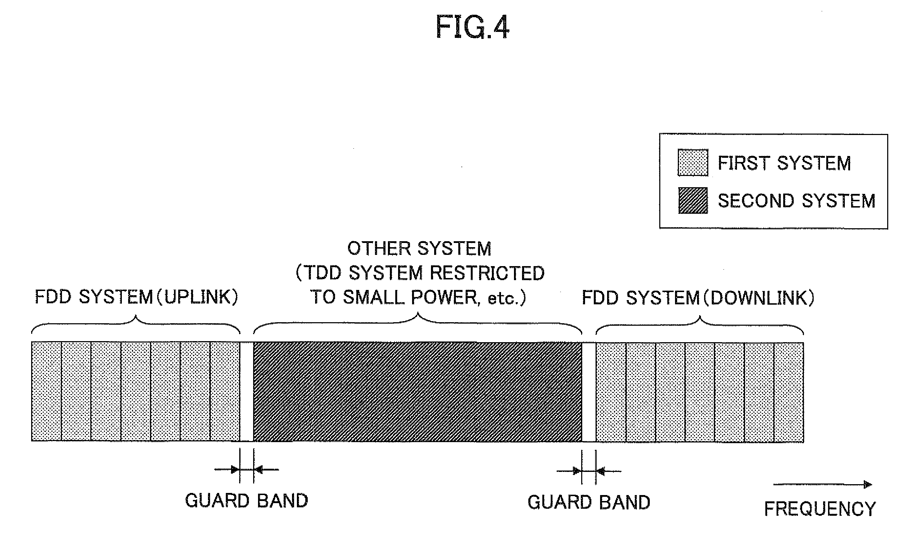

FIG. 4 shows a frequency utilization status in the mobile communications system in FIG. 3. In an example shown, there exist seven operators which provide a communications service in the first system of the FDD scheme, each operator using a predetermined bandwidth respectively for uplink and downlink. A bandwidth which can be used by one operator may be any appropriate bandwidth, so that, as an example, it may be 5 MHz, 10 MHz, 20 MHz, 100 MHz, etc.

The second system of a TDD scheme conducts communications uplink and downlink within a bandwidth (a center gap) between uplink and downlink of the first system of the FDD scheme. The base station of the second system transmits a signal with a power which is weak relative to the base station of the first system, so that interference provided to the first system by the second system is small. As an example, a base station of the first system may transmit a signal at 20W, while a base station of a second system may transmit a signal at 10mW. Interference caused on the first system by the second system is small, so it suffices that the guard band between the first and second systems is relatively narrow.

The second system of the TDD scheme is used in a geographically-restricted manner. Any appropriate method may be used for the geographical restriction; as an example, the second system may be used in a closed space such as indoors. In this case, a radio wave is shielded by a wall, so that interference becomes small for both the first system and the second system. Even according to such a viewpoint, it suffices that the guard band between the first and second systems is relatively narrow.

The second system may be not only of a TDD scheme, but also may be of a different scheme. However, there is an advantage that, when the TDD scheme is used, the same frequency is used for uplink and downlink, so that the center gap is not needed, and frequency utilization efficiency is good. While there is a concern with a problem of coverage (especially for uplink) in the TDD scheme, the problem of coverage does not become salient if the TDD scheme is used in a geographically-restricted manner. Thus, it is preferable that the second system is a TDD scheme as in the present embodiment.

### Variation 1

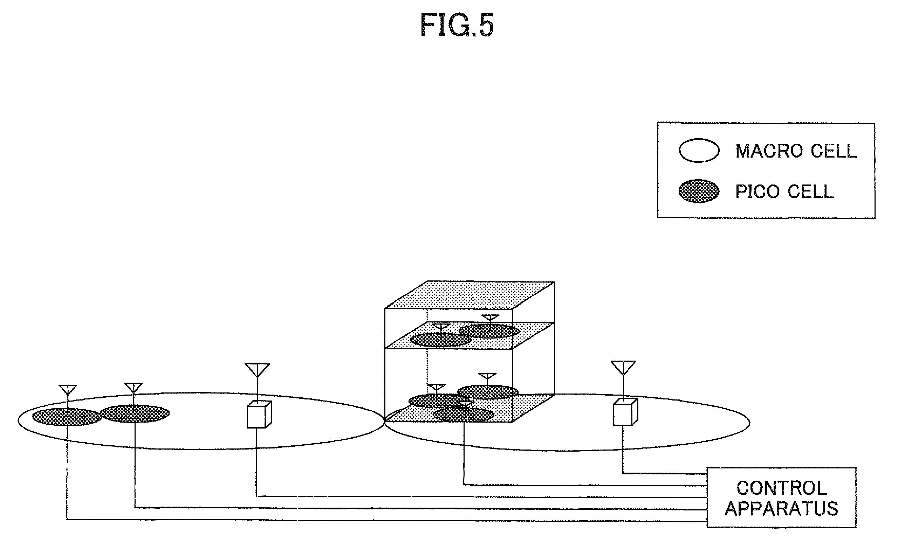

FIG. 5 shows a different mobile communications system. Similar to FIG. 3, the mobile communications system includes a first system which communicates with a user apparatus in a frequency division duplex (FDD) scheme and a second system which communicates with a user apparatus in a scheme which is different from the first system. Unlike FIG. 3, the mobile communications system has a control apparatus which is connected to the base stations of the first system and the second system.

Cells of the first system make up a macro cell, while cells of the second system make up a pico cell. The pico cell is provided at locations such as a specific region in which traffic tends to concentrate, a specific indoor location, etc. Thus, in general, the downlink transmission power of the base station of the second system is weaker than the downlink transmission power of the base station of the first system. The second system is any mobile communications system of a small power that operates at a frequency which is different from the first system and is, preferably, a system of a time division duplex (TDD) scheme. Moreover, the second system preferably operates such that it supplements the first system. For example, it is possible that, when the number of users becomes large in the first system, some of the users are carried in the neighboring second system to achieve traffic load distribution. The first and second systems may be outdoor systems or indoor systems, but for convenience of explanations, an outdoor first system, an indoor second system, and an outdoor second system are shown.

It is desirable that the user apparatus may communicate in both the first and second systems. When the communications scheme differs between the first and the second systems, device configurations need to be provided separately for each system, so that the user apparatus becomes expensive. However, when the first system is an FDD scheme and the second system is a TDD scheme, there are a large number of common parts in the configuration of the user apparatus, making it possible to realize a shared-use terminal at low cost.

A control apparatus is communicably coupled between the base station of the first system and the base station of the second system. The control apparatus variably controls the guard band between the first and the second systems. As described above, the guard band between the first and the second systems may be made narrow by making the second system small power and geographically restricting the second system, etc. More generally, a width of the guard band required between the first and the second systems may differ depending on the communications environment and actual communications conditions. For example, the guard band width required differs between when the base station of the second system transmits a signal at 10 mW and when the base station of the second system transmits a signal at 50 mW. Moreover, a base station of the first system may transmit a signal at 20W, a certain base station of the second system may transmit a signal at 10MW, and a different base station of the second system may transmit a signal at 50mW. Furthermore, while the second system may use not only the TDD scheme but also the FDD scheme, but, when the FDD scheme is used, a center gap needs to be provided between uplink and downlink. In this case, how much center gap is needed may also differ depending on a center frequency and actual communications conditions.

The control apparatus variably controls the guard band between the first and second systems depending on such actual communications conditions. Each base station reports, to the control apparatus, information such as transmission power of own apparatus, measured interference amount, the number of users carried by an own cell, etc. Frequency of the reporting may be periodic, may be aperiodic, or may be on an as needed basis in addition to conducting on a periodc basis.

### Variation 2

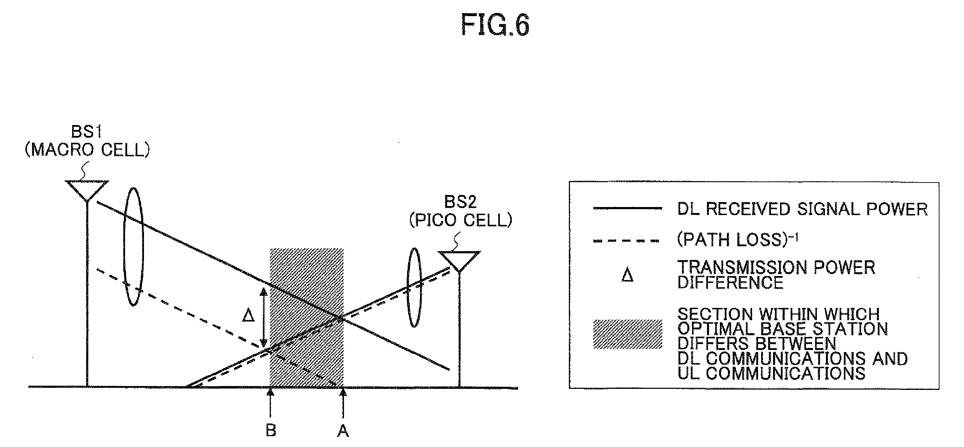

FIG. 6 shows how a macro cell of the first system and a pico cell of the second system neighbor. For convenience of explanations, a base station for the macro cell is referred to as BS1, while a base station for the pico cell is referred to as BS2. A downlink (DL) signal transmitted from the BS1, which attenuates with distance, reaches relatively far as it is transmitted with strong power. As shown, a solid line extending from the BS1 schematically shows received power (power at the time of reception at a user apparatus) of the DL signal. A downlink (DL) signal transmitted from the base station BS2 for the pico cell, which also attenuates with distance, reaches relatively near only as it is transmitted with weak power in this case. As shown, a solid line extending from the BS2 schematically shows received power (power at the time of reception at a user apparatus) of the DL signal.

If transmission power of BS1 and BS2 is the same, the DL received signal from the base station BS1 and the DL received signal from the base station BS2 become theoretically equal at an intermediate point B. However, in the instant example, the transmission power of the base station BS2 of the second system is weaker than the transmission power of the base station BS1 of the first system, so that both DL received signal powers become equal at a point A (a point which is near BS2 relative to the intermediate point B). This means that a quality of a DL received signal from the base station BS1 is better in a section from the base station BS1 to the point A, in which section, the base station BS1 is suitable for downlink communications. Moreover, from the point A to the base station BS2, quality of DL received signal from the base station BS2 becomes better, so that, in that section, the base station BS2 becomes a base station suitable for downlink communications.

On the other hand, for the user apparatus, gain is larger when connecting uplink to a base station with a small path loss. For example, when uplink transmission power from the user apparatus UE is constant, the received power at the base station becomes bigger and received quality becomes better when connecting to a base station with a small path loss. Moreover, for example, when the user apparatus UE makes uplink transmission power variable according to the path loss, uplink transmission power for the user apparatus to transmit can be lowered when connecting to a base station (or a remote radio apparatus) with a small path loss, making it possible to lower consumption power of the user apparatus. When the user apparatus exists between A and B, the relative magnitudes of downlink received power is such that downlink received power of the radio base station BS becomes larger, as shown in Fig. 1. As shown with a broken line, the inverse of the path loss with respect to the base station BS1 and the inverse of the path loss with respect to the base station BS2 become equal at an intermediate point B. Therefore, from the base station BS1 to the point B, quality of an uplink signal to the base station BS1 becomes better, so that in that section the base station BS1 is suitable for uplink communications. Moreover, from the base station BS2 to the point B, quality of an uplink signal to the base station BS2 becomes better, so that in that section the base station BS2 is suitable for uplink communications.

In this way, when transmission power of neighboring base stations differs, a section (shaded portion in FIG. 6) occurs such that an optimal base station differs between downlink communications and uplink communications. If the user is within the section of the shaded portion, it considers connecting to the BS1 or BS2 for both uplink and downlink. In this case, if the macro cell frequency and the pico cell frequency are the same, the following problem becomes a concern.

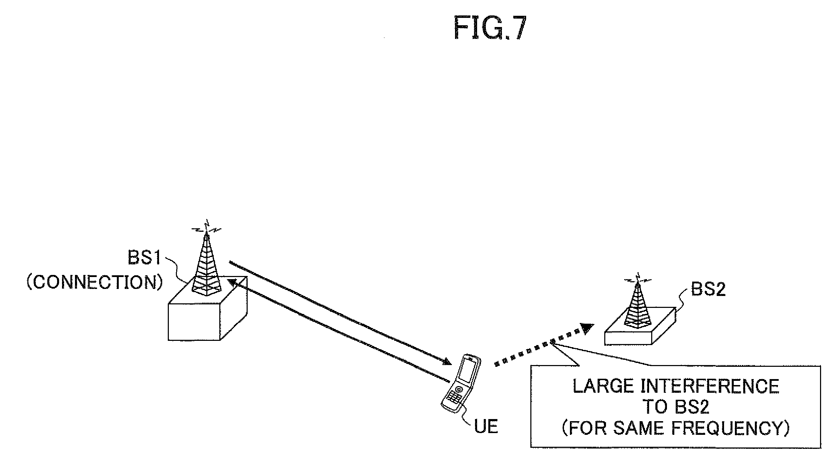

FIG. 7 shows how connection is made to the BS1 for both uplink and downlink. In this case, downlink communications may be conducted well. On the other hand, for uplink communications, the user apparatus needs to transmit a signal with strong power in order to ensure that a signal arrives at the base station BS1 via a relatively long distance. However, in such a case, there is a concern that, if the BS1 and BS2 use the same frequency, a large interference power reaches the base station BS2 which is proximate

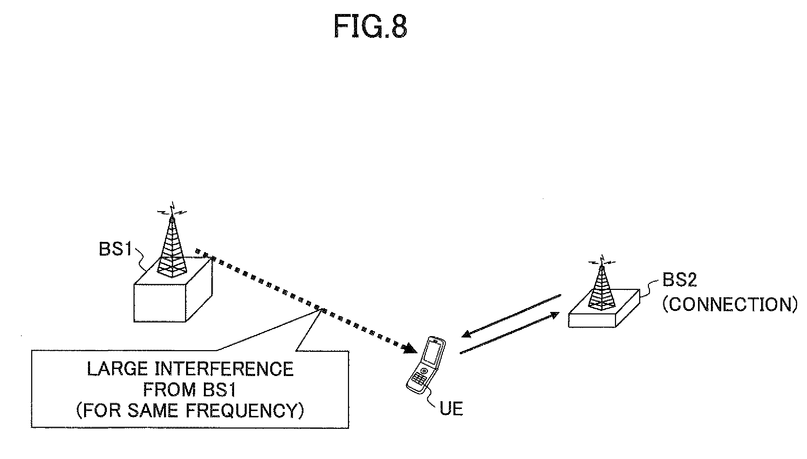

Conversely to FIG. 7, FIG. 8 shows how connection is made to the BS2 for both uplink and downlink. In this case, uplink communications may be conducted well. However, there is a concern that the user apparatus may receive relatively large interference from the BS1 since received power of a downlink signal from the BS1 is larger than from the BS2.

However, in a mobile communications system according to the embodiments of the present invention, a frequency used by the first system and a frequency used by the second system mutually differ. Thus, interference of concern in FIG. 7 or 8 is substantially reduced. Moreover, the second system is small in power and geographically restricted, so that interference is also mitigated from such a viewpoint. Thus, according to the present embodiment, when a user exists in a section of the above-shaded section, a macro cell may be connected to and a pico cell may be connected to. For example, a user apparatus may be connected to an appropriate cell, taking into account a traffic amount of each cell. In other words, within the first system, each base station transmits a signal all at the same power, so that the above-described concern for interference may be removed. The second system uses a bandwidth (a center gap) which used to be overhead initially, making it possible to achieve increased frequency utilization efficiency.

The present invention may be applied to any appropriate mobile communications system which uses an FDD scheme. For example, the present invention may be applied to HSDPA/HSUPA W-CDMA, LTE, IMT-advanced, WiMAX and Wi-Fi systems, etc.

As described above, while the present invention is described with reference to specific embodiments, the respective embodiments are merely exemplary, so that a skilled person will understand variations, modifications, alternatives, replacements, etc. While specific numerical value examples are used to facilitate understanding of the present invention, such numerical values are merely examples, so that any appropriate value may be used unless specified otherwise. The breakdown of items in the above embodiment is not essential to the present invention, so that matters described in two or more items may be combined for use as needed. For convenience of explanation, while the apparatuses according to the embodiments of the present invention are explained using functional block diagrams, such apparatuses as described above may be implemented in hardware, software, or a combination thereof. The present invention is not limited to the above embodiments, so that variations, modifications, alternatives, and replacements are included in the present invention without departing from the spirit of the present invention.

The present international application claims priority based on Japanese Patent Application No. 2008-226465 filed on September 3, 2008 with the Japanese Patent Office, the entire contents of which are hereby incorporated by reference.

## Claims

1. A mobile communications system including:
a first system which communicates with a user apparatus in a frequency division duplex (FDD) scheme; and
a second system which communicates with a user apparatus in a scheme which is different from the first system, wherein
the second system conducts uplink and downlink communications within a frequency bandwidth between uplink and downlink of the first system,
a geographical range of the second system is narrower than a geographical range of the first system, and
a downlink transmission power of a base station of the second system is weaker than a downlink transmission power of a base station of the first system.

2. The mobile communications system as claimed in claim 1, wherein the second system is a time division duplex (TDD) system.

3. The mobile communications system as claimed in claim 1, wherein the first system is an outdoor communications system and the second system is an indoor communications system.

4. A control apparatus for use in a mobile communications system, the mobile communications system including:
a first system which communicates with a user apparatus in a frequency division duplex (FDD) scheme;
a second system which communicates with a user apparatus in a scheme which is different from the first system, wherein the second system conducts uplink and downlink communications within a frequency bandwidth between uplink and downlink of the first system,
a geographical range of the second system is narrower than the geographical range of the first system,
a downlink transmission power of a base station of the second system is weaker than a downlink transmission power of a base station of the first system,
the control apparatus is communicably coupled to the base station of the first system and the base station of the second system, and
the control apparatus variably controls a guard band between the first system and the second system.

5. A method for use in a mobile communications system, the mobile communications system including:
a first system which communicates with a user apparatus in a frequency division duplex (FDD) scheme;
a second system which communicates with a user apparatus in a scheme which is different from the first system; and
a control apparatus which is communicably coupled to the base station of the first system and the base station of the second system, wherein
the second system conducts uplink and downlink communications within a frequency bandwidth between uplink and downlink of the first system,
a geographical range of the second system is narrower than the geographical range of the first system,
a downlink transmission power of a base station of the second system is weaker than a downlink transmission power of a base station of the first system, and
the control apparatus monitors a communications condition of the second system, and variably controls a guard band between the first system and the second system.
